# EUROPÄISCHE PATENTSCHRIFT

(11) **EP 3 165 390 B1**
(45) Veröffentlichungstag und Bekanntmachung des Hinweises auf die Patenterteilung: **09.05.2018**
(21) Anmeldenummer: 16196347.5
(22) Anmeldetag: 28.10.2016
(51) Int. Cl.: B60K 7/00, F16L 39/06

(54) **RADNABENEINHEIT MIT EINEM VERSCHWENKBAREN HYDRAULIK-MOTOR**
HUB ASSEMBLY HAVING A PIVOTABLE HYDRAULIC MOTOR
ENSEMBLE MOYEU DE ROUE COMPRENANT UN MOTEUR HYDRAULIQUE PIVOTANT

(30) Priorität: 06.11.2015 DE 102015014288
(43) Veröffentlichungstag der Anmeldung: 10.05.2017
(73) Patentinhaber: Tries GmbH & CO. KG, 89584 Ehingen (DE)
(72) Erfinder: Hinz, Christoph, 89607 Emerkingen (DE)
(74) Vertreter: Otten, Roth, Dobler & Partner mbB Patentanwälte

(56) Entgegenhaltungen:
- DE-A1- 10 030 900
- DE-A1- 10 231 704
- DE-A1-102012 021 319
- US-A- 3 612 204
- US-A1- 2015 000 993
- US-B1- 6 302 233

## Beschreibung

Die Erfindung betrifft eine Radnabeneinheit mit einem verschwenkbaren Hydraulik-Motor nach dem Oberbegriff des Anspruchs 1 wie aus DE10030900 bekannt ist, sowie ein entsprechendes Fahrzeug.

### Stand der Technik

Nutzfahrzeuge wie landwirtschaftliche Fahrzeuge bzw. Zugfahrzeuge, wie z.B. Feldhäcksler, Traktoren oder dergleichen, sowie Baumaschinen/Baufahrzeuge wie LKW, Bagger, mobile Kräne, Schwertransporter oder dergleichen, weisen häufig hydrostatische Antriebe auf. Hierbei werden nicht nur zwei Räder gelenkt oder angetrieben, sondern es sind Allradantriebe und/oder Allradlenkungen vielfach gebräuchlich. Bei derartigen Antrieben werden die Antriebsmotoren bzw. Hydraulik-Motoren oft als Nabenmotor zum Direktantrieb des Antriebsrades bzw. der Antriebsräder ausgebildet.

Die Energie-/Druck-Versorgung mit Hydraulikflüssigkeit/-öl erfolgt üblicherweise über einen Hydraulikkreislauf bzw. mittels einem Zulaufpfad und einem Ablaufpfad sowie insbesondere einem Leckagepfad. Hierfür sind Druckschläuche im Einsatz und zudem weist der Motor einen Anschluss/-flansch auf, der die verschiedenen Hydraulik-Anschlüsse für die Schläuche umfasst.

Es hat sich jedoch gezeigt, dass gerade bei derart großen, leistungsstarken Fahrzeugen die Antriebsräder aufgrund der Verstellung bzw. Bewegung im Betrieb, d.h. Dämmungs-/Federweg (insb. um eine Dreh-/Schwenkachse) und/oder Lenkeinschlag (insb. um eine Lenkachse), die flexiblen Schläuche im Laufe der Zeit zu starken Beanspruchungen bzw. Verschleiß unterliegen und beschädigt werden (DD 75 032). Entsprechende kurze Lebensdauern bzw. Ausfallzeiten sind von Nachteil.

So sind bereits Drehdurchführungen für derartige Nabenmotoren im Einsatz, um die Belastungen bzw. Beeinträchtigung der flexiblen Schläuche zu verringern (DE 100 30 900 A1, DE 10 2012 021 319 A1, DE 102 31 704 A1). Bei diesen Schriften sind die Drehachsen der Drehdurchführungen konzentrisch mit der Lenkachse angeordnet. Bei der letztgenannten Schrift ist die Drehdurchführung unmittelbar am Motor angeflanscht.

Aufgrund der beengten Platzverhältnisse bei derartigen schwenkbar gelagerten, insb. lenkbaren Nabenmotoren sind bei den beiden erstgenannten Schriften die Drehdurchführungen nicht am Motor, sondern im Lenklager bzw. in der Lenkaufhängung angeordnet und die Hydraulikverbindung z.B. über ein gegossenes Adapterstück realisiert.

Diese Verbindungen/Adapter müssen jedoch aufgrund der z.T. enormen Hydraulikdrucke wie auch die Drehdurchführungen sehr massiv und somit voluminös sein.

### Aufgabe und Vorteile der Erfindung

Aufgabe der Erfindung ist es demgegenüber eine Radnabeneinheit, insb. eine Radnabenantriebeinheit für ein Fahrzeug, vorzuschlagen, die bei hoher Leistung bzw. Druckbeaufschlagung deutlich kompakter bzw. platzsparender ausgebildet werden kann.

Diese Aufgabe wird, ausgehend von einer Radnabeneinheit bzw. einem Fahrzeug der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Radnabeneinheit dadurch aus, dass die Statoreinheit wenigstens ein erstes, eine erste Flanschfläche aufweisendes Statorelement und ein zweites, eine zweite Flanschfläche aufweisendes Statorelement aufweist, wobei in Richtung der Drehachse zwischen den beiden Statorelementen und/oder Flanschflächen ein Abstand vorgesehen ist.

Mit Hilfe dieser Maßnahme wird erreicht, dass die Rotoreinheit einerseits im Bereich des Abstandes bzw. dieses Zwischenbereiches die Rotoreinheit sehr großvolumig bzw. massiv ausgebildet werden kann. So können die Hydraulikkanäle/-bohrungen der Rotoreinheit mit vergleichsweise viel Material umgeben bzw. massiv ummantelt werden, so dass auch besonders hohe Hydraulikdrucke aufgenommen werden können bzw. beaufschlagbar sind.

Andererseits kann durch die beiden beabstandeten Statorelemente die Rotoreinheit in vorteilhafter Weise gelagert werden. Zudem kann die Übergabe der Hydraulikflüssigkeit vom statischen zum rotierenden Teil der Drehdurchführung innerhalb eines oder der beiden Statorelemente und mit geringem Abstand zur Lagerung. Auch dies führt zu einer sehr massiven und kompakten Bauweise, insb. der Statorelemente. Die Statorelemente umgeben/ummantel die Rotoreinheit in diesem Bereich, so dass bei relativ kleinem Durchmesser der Rotoreinheit im Bereich der Statorelemente hohe Drucke realisierbar sind.

In vorteilhafter Weise ist im Bereich der Hydraulik-Anschlüsse ein erster maximaler Durchmesser und/oder eine erste Querschnittsfläche der Rotoreinheit größer als ein zweiter maximaler Durchmesser und/oder eine zweite Querschnittsfläche der Rotoreinheit im Bereich der Statorelemente und/oder Flanschflächen ist. Beispielsweise kann der "Freiraum" bzw. Abstand/Zwischenbereich, d.h. in Richtung der Drehachse der Drehdurchführung zwischen den beiden Statorelementen, für eine Querschnittserweiterung/- vergrößerung bzw. Durchmesservergrößerung der Rotoreinheit verwendet werden, so dass vorzugsweise in diesem Bereich der Rotoreinheit Hydraulik-Anschlüsse für die Ver-/Entsorgung mit Hydraulikflüssigkeit/-öl realisierbar ist. Das bedeutet, dass mittels der Drehdurchführung zwischen den beiden Statorelementen die Übergabe bzw. Weiterleitung der Hydraulikflüssigkeit von/zu der schwenkbaren Radnabe/Motor zu/von der (statischen) Karosserie/Chassis des Fahrzeugs in vorteilhafter Weise realisierbar ist.

Vorzugsweise sind in Richtung der Drehachse zumindest die Hydraulik-Anschlüsse der Rotoreinheit zwischen den beiden Statorelementen und/oder Flanschflächen angeordnet. Der Abstand/Zwischenbereich/Freiraum ermöglicht eine groß dimensionierbare und/oder massive Ausbildung der Anschlüsse/Kanäle für Druckleitungen/-schläuche. Hiermit können hohe Leistungen bzw. Drucke bzw. große Strömungsmengen realisiert/gehandhabt werden, insb. bei relativ großen Kanalquerschnitten der Rotoreinheit. Trotzdem kann ein relativ geringer Bauraum/Platzbedarf für die Übergabe/Weiterleitung mittels der Drehdurchführung umgesetzt werden.

Gegebenenfalls ist ein Zwischenelement bzw. Adapterstück zwischen Drehdurchführung und Hydraulikmotor vorgesehen. Vorteilhafterweise sind die beiden Flanschflächen der Statorelemente am Anschlussflansch des Motorgehäuses angeordnet. Das bedeutet, dass die Drehdurchführung bzw. die Statoreinheit/Statorelemente direkt am Hydraulikmotor bzw. Motorgehäuse angeordnet bzw. fixiert wird. Dies ist besonders kompakt und stabil.

Vorteilhafterweise ist wenigstens eine Verbindungseinheit zum Verbinden wenigstens eines der beiden Statorelemente mit dem Motorgehäuse vorgesehen ist. Beispielsweise ist die Verbindungseinheit als Fixierschraube ausgebildet und/oder sind mehrere Verbindungseinheiten zum Verbinden/Fixieren der Drehdurchführung mit dem Motor/Motorgehäuse vorgesehen.

Bevorzugt umfasst die Verbindungseinheit wenigstens ein auf Zug belastetes Zugelement, insbesondere Schraube, und ein in Richtung eines Verstellweges verstellbares Spannelement zum Erzeugen der Zugbelastung des Zugelementes und zum Verspannen wenigstens eines der beiden Statorelemente mit dem Motorgehäuse.

Gemäß der Erfindung können nun auch einzelne Komponenten, d.h. insb. Drehdurchführung/Statorelemente und Motor/Motorgehäuse, mit der jeweils benachbarten Komponenten sicher miteinander verbunden bzw. gegeneinander verpresst und wieder gelöst werden.

In einer vorteilhaften Variante der Erfindung weist das Spannelement eine zum Verstellweg winklig angeordnete erste Kontaktfläche zum Erzeugen der Zugbelastung und/oder das Zugelemente eine zur Zugbelastung winklig angeordnete zweite Kontaktfläche zum Erzeugen der Zugbelastung auf. Mit Hilfe einer derartigen winklig angeordneten ersten und/oder zweiten Kontaktfläche kann in vorteilhafter Weise mit Hilfe des erfindungsgemäßen quer zur Richtung der Zugbelastung ausgerichteten Verstellweges des Spannelementes die Zugbelastung des Zugelementes und somit das aneinander pressen benachbarter Elemente/Komponenten verwirklicht werden.

Dementsprechend vorteilhaft bzw. dicht ist die Durchleitung/Übergabe des Fluides zwischen den Komponenten bzw. zwischen einer ersten Anschlussöffnung des ersten Elementes mit einer zweiten Anschlussöffnung des zweiten Elementes.

Generell wird durch die winklige Ausrichtung der Kontaktflächen die Umlenkung des durch den Verstellweg erzeugten Kraftflusses in Richtung der Zugbelastung in besonders vorteilhafter Weise erreicht.

Vorzugsweise weist das Zugelement eine wenigstens teilweise in Richtung der Zugbelastung ausgerichtete Anschlagfläche zum Erzeugen der Zugbelastung durch Anschlagen am Element bzw. der Komponente und/oder am Spannelement auf. Mit Hilfe der vorteilhaften Anschlagfläche kann beispielsweise zur durch das Verstellen des Spannelementes längs des Verstellweges erzeugte Spannkraft eine hierzu wenigstens teilweise entgegengerichtete Gegenkraft erzeugt werden. Beispielsweise weist das Zugelement eine quer zur Längsrichtung des Zugelementes ausgerichtete Hervorstehung auf. Zum Beispiel kann das Zugelement eine entsprechend herausragende Nase, wenigstens ein Gewindegang etc. aufweisen oder das Zugelement kann ein Querelement aufweisen, das beispielsweise als separates Element oder einstückig mit dem Zugelement ausgebildet ist. Gegebenenfalls ist das Zugelement T-förmig, H-förmig oder ähnlich ausgebildet.

Vorzugsweise ist die Anschlagsfläche als die zweite Kontaktfläche des Zugelementes ausgebildet. Somit wird eine Doppelfunktion der entsprechenden Fläche des Zugelementes realisiert, was zu einer konstruktiv einfachen Ausbildung des Zugelementes und somit der Verbindungseinheit führt.

Grundsätzlich kann gemäß der Erfindung die zweite Kontaktfläche auch ohne die sogenannte erste Kontaktfläche des Spannelementes vorgesehen werden. Gemäß der Erfindung hat die Bezeichnung "zweite" bzw. "erste" lediglich einen zuordnenden Charakter zum jeweiligen Element bzw. der Komponente.

In einer bevorzugten Variante der Erfindung weist das Zugelement eine zweite Kontaktfläche sowie eine mit/von der zweiten Kontaktfläche in Wirkverbindung stehende, separate Anschlagsfläche auf. Hiermit kann in vorteilhafter Weise die zweite Kontaktfläche zum Erzeugen der Zugbelastung und die separate Anschlagsfläche zum Erzeugen bzw. Aufnehmen der Gegenkraft vorgesehen werden.

In einer besonderen Weiterbildung der Erfindung umfasst das Zugelement wenigstens zwei zweite Kontaktflächen und/oder Anschlagsflächen. Es hat sich gezeigt, dass durch eine derartige Ausbildung des Zugelementes eine besonders einfache Realisierung der Verbindungseinheit gemäß der Erfindung möglich ist. Dies reduziert den Herstellungsaufwand sowie den Montage- bzw. Demontageaufwand einer erfindungsgemäßen Verbindungseinheit.

Gegebenenfalls umfasst die Verbindungseinheit wenigstens ein Zugelement und zwei Spannelemente. Es hat sich in der Praxis diese vorteilhafte Verbindungseinheit als besonders geeignet herausgestellt. Beispielsweise kann die Verbindungseinheit zwei konstruktiv im Wesentlichen identische Spannelemente und/oder ein im Wesentlichen achsensymmetrisches Zugelement umfassen. Hierdurch wird die Umsetzung der Verbindungseinheit gemäß der Erfindung weiter verbessert, insbesondere die Herstellung in Bezug zum Aufwand und zur Lagerhaltung bzw. Ersatzteillieferung minimierbar.

Vorzugsweise weist das Spannelement ein Schraubgewinde auf, das insbesondere mit einem Schraubgewinde des Elements bzw. der Komponente in Wirkverbindung steht, d.h. dem Motor/Motorengehäuse oder dem Statorelement. Mit Hilfe eines Schraubgewindes kann eine vorteilhafte Spannkraft erzeugt werden, die insbesondere vom Element bzw. der Komponente in vorteilhafter Weise aufgenommen und kompensierbar ist.

In einer besonderen Weiterbildung der Erfindung weist das Zugelement wenigstens an einem Endabschnitt ein Schraubgewinde auf, das gemäß der Erfindung die zweite Kontaktfläche und/oder die Anschlagfläche umfasst. Hierdurch kann beispielsweise auf ein Spannelement in diesem Endabschnitt des Zugelementes verzichtet werden. Vorzugsweise wird ein Zugelement mit einseitig vorhandenem Gewinde im Motor/Motorgehäuse fixiert, wobei das zweite Ende des Zugelementes aus diesem herausragt. Vorzugsweise am gegenüberliegenden Endabschnitt bzw. am aus dem ersten Verteilelement herausstehenden Abschnitt des Zugelementes kann ein Spannelement gemäß der Erfindung ansetzen und entsprechend die Spannkraft bzw. die Zugbelastung des Zugelementes erzeugen.

Vorzugsweise ist das Spannelement als Schraube, insbesondere Madenschraube, mit einem wenigstens teilweise konischen Ende ausgebildet. Mit Hilfe dieser Maßnahme kann das Spannelement beispielweise in dem Element bzw. der Komponente einerseits sicher fixiert und andererseits mittels dem Schraubgewinde die Spannkraft und somit die Zugbelastung des Zugelementes unter Zuhilfenahme des konischen Endes realisieren. Hierbei umfasst das konische Ende des Spannelementes in vorteilhafter Weise die winklig angeordnete erste Kontaktfläche gemäß der Erfindung. Ein derartiges Spannelement ist besonders einfach herstellbar und zu montieren bzw. demontieren. Es kann auch auf bereits handelsübliche Komponenten, insbesondere Madenschrauben zurückgegriffen werden, was die Wirtschaftlichkeit der Erfindung weiter verbessert.

Grundsätzlich ist es von Vorteil, das Zugelement in einem ersten Element bzw. der Komponente, isnb. dem Motorengehäuse, fest zu fixieren bzw. zu verankern.

Möglicherweise ist zwischen den beiden verspannten/verpressten Elemente bzw. der Komponenten wenigstens ein Dichtungselement bzw. eine Flachdichtung oder dergleichen vorgesehen.

Darüber hinaus wird von außen z.B. die erfindungsgemäße Verbindungseinheit lediglich durch die entsprechenden Stirnseiten der Spannelemente wie Madenschrauben oder dergleichen in entsprechenden Ausnehmungen bzw. Bohrungen oder dergleichen der Verteilerelemente wahr genommen. Dies ist besonders platzsparend und montage/demontagefreundlich

Weiterhin kann gemäß der Erfindung eine spielfreie Verspannung bzw. Verbindung zweier oder mehrerer Element bzw. der Komponenten verwirklicht werden.

Gerade diese vorteilhaften Verbindungseinheiten ermöglichen eine Anordnung an einem Außen-/Randbereich der Drehdurchführung bzw. der Statoreinheit/Statorelemente, so dass im Innern der Statorelemente gemäß der Erfindung keine Beeinträchtigung bzw. Schwächung realisiert wird. Das heißt, dass die notwendigen Hydraulikkanäle, -nuten, -bohrungen oder dergleichen nicht durch die Verbindung bzw. die Verbindungseinheit beeinträchtigt/geschwächt werden, da diese sich nur über einen Rand-/Außenbereich der Komponente erstreckt. Entsprechend massiv sind die Hydraulikkanäle, -nuten, -bohrungen, etc. mit relativ viel Material/Metall ummantelt/umgeben, so dass hohe Drucke bzw. große Leistungen/Volumenströme realisierbar sind und trotzdem nur sehr wenig Bauraum von der Drehdurchführung benötigt wird. Dies ist gerade bei den sehr beengten Platzverhältnissen bei gefederten und gelenkten hydrostatischen Antriebsrädern bzw. Nabenmotoren von enormem Vorteil.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: schematisch eine erfindungsgemäße Verbindungseinheit mit Gewinde und einer Madenschraube,
- Figur 2: schematisch, perspektivisch eine erfindungsgemäße Drehdurchführung ,
- Figur 3: schematisch, perspektivisch ein erfindungsgemäßer hydrostatischer Nabenmotor,
- Figur 4: schematisch ein Schnitt durch die erfindungsgemäße Drehdurchführung gemäß Figur 2,
- Figur 5: schematisch eine Draufsicht auf die erfindungsgemäße Drehdurchführung gemäß Figur 2 und
- Figur 6: schematisch, perspektivisch ein Bereich einer erfindugnsgemäßen Radnabeneinheit mit der am Nabenmotor fixierten Drehdurchführung gemäß Figur 2.

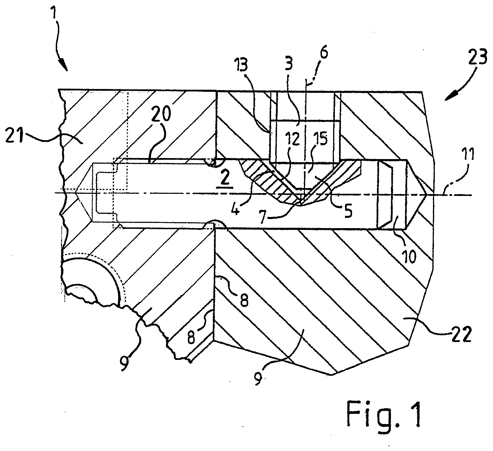

In Figur 1 ist schematisch eine Verbindungseinheit 1 der Radnabeneinheit gemäß der Erfindung schematisch dargestellt. Die
Verbindungseinheit 1 weist ein Zugelement 2 auf, das mit einem an einem ersten Ende angeordneten Spannelement bzw.
Madenschraube 3 in Wirkverbindung steht. Das Zugelement 2 gemäß Figur 1 ist im Wesentlichen als Rundstab oder dergleichen ausgebildet und/oder umfasst eine Ausnehmung 4, in die die Madenschraube 3 im verbundenen Zustand wenigstens teilweise hineinragen. An einem zweiten Ende des Zugelementes 2 ist ein Gewinde 20 zur Fixierung in einem Nabenmotor-Gehäuse 21 vorgesehen.

Die Madenschraube 3 weist ein konisches Ende 5 auf. Eine Mantelfläche 15 des konischen Endes der Madenschraube 3 ist winklig zur Achse 6 der Madenschraube 3 angeordnet. So stellt die Mantelfläche 15 bzw. das konische Ende 5 der Madenschraube 3 die erste Kontaktfläche dar. Der Verstellweg der Madenschraube 3 ist in Richtung der Achse 6 der Madenschraube 3 ausgerichtet. Das Verspannen bzw. die Erzeugung der Zugbelastung des Zugelementes 2 und somit das Zusammenpressen von Elementen/Komponenten 9 bzw. des Nabenmotor-Gehäuse 21 mit einem Statorelement 22 einer Drehdurchführung 23 erfolgt durch Verstellen der Madenschraube 3 in Richtung des Zugelementes 2.

Die Ausnehmung 4 des Zugelementes 2 ist in vorteilhafter Weise kegelförmig ausgebildet und weist eine Spiegelachse 7 bzw. eine Spitze auf, die bezüglich der Achse 6 der Madenschraube 3 wenigstens im nichtmontierten Zustand versetzt bzw. beabstandet ist. Vorzugsweise ist die Symmetrieachse 7 zwischen der Achse 6 der Madenschraube 3 und einer Kontaktseitenfläche 8 des entsprechenden Elementes 9 angeordnet.

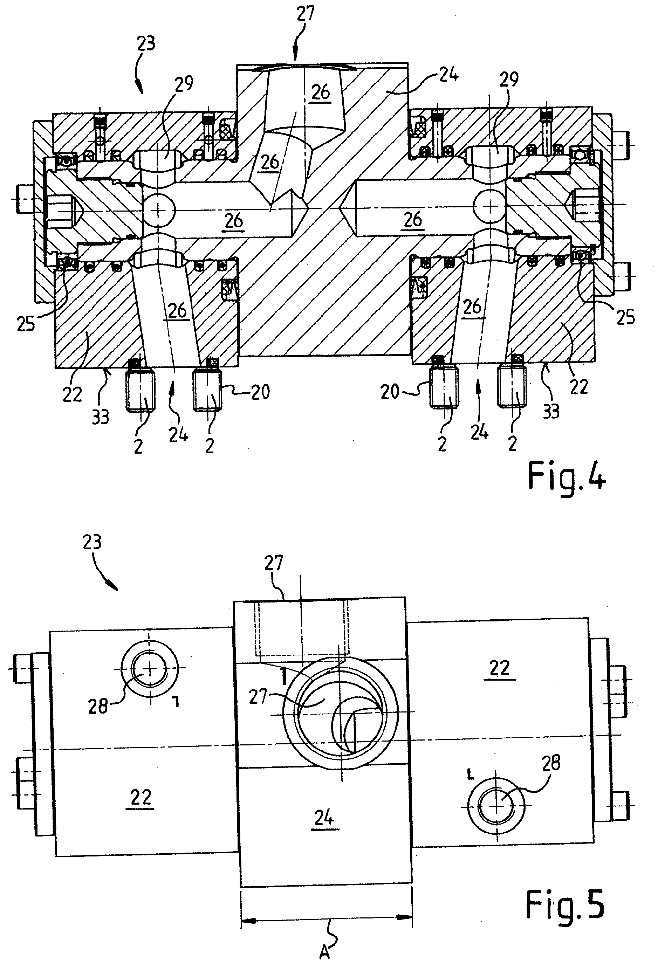

Bei der Montage der Verbindungseinheit 1 wird in der in Figur 1 dargestellten Weise das Zugelement 2 in einer entsprechende Bohrung 10 bzw. Ausnehmung der Elemente 9 angeordnet bzw. geschraubt. Das Zugelement 2 wird, falls notwendig, derart verdreht, dass die Ausnehmung 4 in etwa in Richtung der Madenschrauben 3 ausgerichtet ist. Anschließend wird die Madenschraube 3 soweit längs der Achse 6 in Richtung des Zugelementes 2 verstellt, bis das konische Ende 5 der Madenschraube 3 wenigstens teilweise in die Ausnehmung 4 des Zugelementes 2 hineinragt. Dadurch, dass die Achse 6 mit den Symmetrieachse 7 in vorteilhafter Weise versetzt angeordnet ist, wird eine Zugkraft in Richtung der Längsachse 11 des Zugelementes 2 mit Hilfe der entsprechenden kegelförmigen Mantelfläche 12 der Ausnehmung 4 erzeugt. Die Madenschraube 3 drücken auf die entsprechende Mantelfläche 12, wodurch die Zugbelastung des Zugelementes 2 generiert wird. Diese Zugbelastung führt zu einem Verspannen/Fixieren/Verbinden der beiden Elemente 9 bzw. des Nabenmotor-Gehäuse 21 mit dem Statorelement 22 der Drehdurchführung 23, so dass in Figur 1 nicht näher dargestellte Anschlussöffnungen 24 (vgl. Figur 5) der Elemente 9 wirkungsvoll zueinander verspannt bzw. abgedichtet sind. Die Madenschrauben 3 weisen Anschlagflächen 13 auf, die mit den Elementen 9 in Kontakt sind und hierdurch den Kraftschluss der Verbindung realisieren.

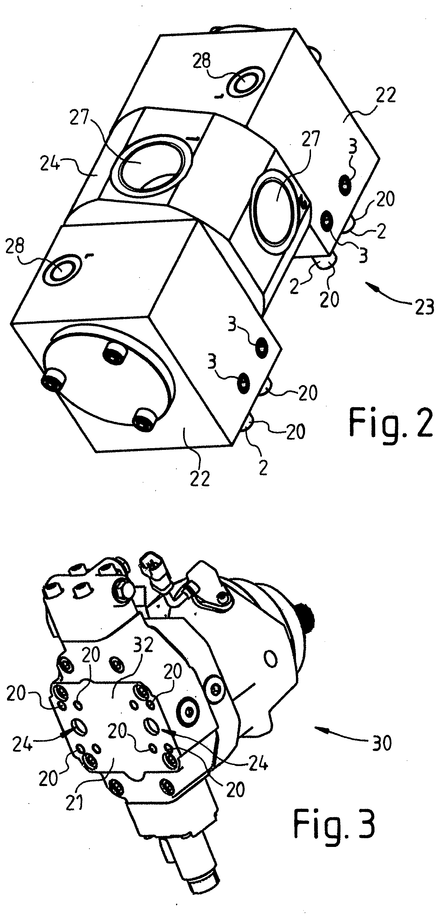

Vor allem mittels Figuren 2, 4 und 5 wird deutlich, dass die Drehdurchführung 23 neben den zwei mit einem Abstand A voneinander beabstandeten Statorelementen 22 eine Rotoreinheit 24 aufweist. Der Abstand A bildet somit einen Zwischenbereich bzw. "Freiraum" aus, in dem die Rotoreinheit 24 einen größeren Querschnitt bzw. Außendurchmesser aufweisen kann, als im Bereich der Statorelemente 22. Dies wird gerade auch im Schnitt gemäß Figur 4 deutlich. So sind Lager 25 endseitig angordnet, was eine stabile und platzfreundliche Anordnung ermöglicht.

Die "Verdickung" bzw. Querschnittsvergrößerung im Bereich des Abstandes A ermöglicht eine biegesteife und massive Ausbildung der Rotoreinheit 24. So sind Hydraulik-Kanäle 26 bzw. -Bohrungen 26 mit viel Material/Metall/Stahl umgeben, was hohe Druckbelastungen ermöglicht.

Im Bereich des Abstandes A weist die Rotoreinheit 24 bzw. Drehdurchführung 23 Anschlüsse 27 für Hydraulikflüssigkeit auf, insb. für Zulauf 27 und Ablauf 27. In Figur 5 ist in den Statorelementen 22 je ein Rücklaufanschluss 28 für sog. Lecköl dargestellt. So wird über die Statorelemente 22 zu/von den die Kanalöffnungen 24 bzw. Motoranschlüsse 24 Hydraulikflüssigkeit/-öl zur/von der Rotoreinheit 24 geleitet, wobei Ringnuten 29 den Übergang zwischen den sich relativ zueinander verstellbaren/verdrehbaren Vorrichtungen 22, 24 realisieren. Die Übergabe an nicht näher dargestellte insb. flexible Leitungen/Schläuche erfolgt über die Anschlüsse 27 der Rotoreinheit 24.

Die Statorelemente 22 sind an das Motorgehäuse 21 eines Hydraulik-Motors 30 mit den Zugelementen 2 bzw. Gewinden 20 fest fixiert/verspannt. Durch diese Verbindungsart ist gerade im Inneren der Drehdurchführung 23 bzw. der Statorelemente 22 wenige bzw. keine Beeinträchtigung des Materials bzw. der Kanäle 26 realisiert. So kann eine hohe Druckbeaufschlagung bei vergleichsweise großen Kanäle 26 bzw. bei großen lichten Durchmessern der Kanäle 26 erreicht werden.

Auch kann eine massive und stabile Ausbildung der Rotoreinheit 24 im Bereich des Abstandes A durch den Freiraum bzw. die Verdickung erreicht werden und somit eine hohe Druckbeaufschlagung bei vergleichsweise großen Kanäle 26 bzw. bei großen lichten Druchmessern der Kanäle 26 der Rotoreinheit 24.

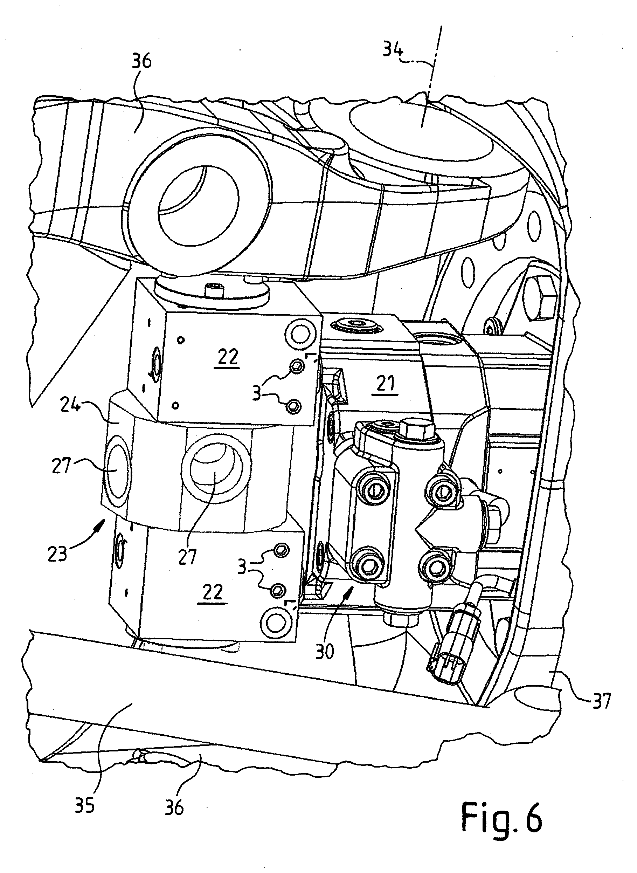

In Figur 6 ist die miteinander fest fixierte Ausführung abgebildet, d.h. Drehdurchführung 23 bzw. Flanschflächen 33 der Statorelemente 22 direkt an einem Anschlussflansch 32 des Motorgehäuses 21 bzw. Motors 30 angeordnet/fixiert.

Zudem sind eine Lenkachse 34 des lenkbaren Nabenantriebs mit Lenkgestänge 35 sowie Federvorrichtung 36 sowie Flegenaufnahme 37 teilweise dargestellt. Das heißt, dass hier der Motor 30 sowohl um die Lenkachse 34 als auch um eine nicht näher dargestellte Schwenk-/Federungsachse verstellbar/verdrehbar ist. Durch die vorteilhafte Ausbildung der Erfindung ist jedoch eine lange Lebensdauer der nicht dargestellten flexiblen, an die Anschlüsse 27 und 28 vorteilhaft anzuschließenden Anschlussschläuche gewährleistet.

## Patentansprüche

1. Radnabeneinheit für ein Fahrzeug mit einer einen Hydraulik-Motor (30) umfassenden Hydraulik-Antriebseinheit, wobei wenigstens eine Schwenk- und/oder Lenkachse zum Verschwenken und/oder Lenken des Hydraulikmotors vorgesehen ist, wobei der Hydraulik-Motor wenigstens ein Motorgehäuse (21) aufweist, wobei das Motorgehäuse einen Anschlussflansch (32) mit zumindest einem Zulauf- und einem Ablauf-Anschluss (27) zur Druckbeaufschlagung mit Hydraulikflüssigkeit aufweist, wobei eine Drehdurchführung (23) zur Durchleitung der Hydraulikflüssigkeit zum/vom Hydraulik-Motor vorgesehen ist, wobei die Drehdurchführung wenigstens eine zumindest einen Flansch aufweisende Statoreinheit und eine in Bezug zur Statoreinheit um eine Drehachse drehbare, zumindest zwei Hydraulik-Anschlüsse (27 und 28) zur Druckbeaufschlagung mit Hydraulikflüssigkeit aufweisende Rotoreinheit (24) umfasst, **dadurch gekennzeichnet, dass** die Statoreinheit wenigstens ein erstes, eine erste Flanschfläche (33) aufweisendes Statorelement und ein zweites, eine zweite Flanschfläche (33) aufweisendes Statorelement aufweist, wobei in Richtung der Drehachse zwischen den beiden Statorelementen und/oder Flanschflächen ein Abstand vorgesehen ist.

2. Radnabeneinheit nach Anspruch 1, **dadurch gekennzeichnet, dass** in Richtung der Drehachse zumindest die Hydraulik-Anschlüsse der Rotoreinheit (24) zwischen den beiden Statorelementen und/oder Flanschflächen angeordnet sind.

3. Radnabeneinheit nach einem der vorgenannten Ansprüche, **dadurch gekennzeichnet, dass** im Bereich der Hydraulik-Anschlüsse(27 und 28) ein erster maximaler Durchmesser und/oder eine erste Querschnittsfläche der Rotoreinheit größer als ein zweiter maximaler Durchmesser und/oder eine zweite Querschnittsfläche der Rotoreinheit im Bereich der Statorelemente (22) und/oder Flanschflächen ist.

4. Radnabeneinheit nach einem der vorgenannten Ansprüche, **dadurch gekennzeichnet, dass** die beiden Flanschflächen der Statorelemente (22) am Anschlussflansch des Motorgehäuses (21) angeordnet sind.

5. Radnabeneinheit nach einem der vorgenannten Ansprüche, **dadurch gekennzeichnet, dass** wenigstens eine Verbindungseinheit (1) zum Verbinden wenigstens eines der beiden Statorelemente (22) mit dem Motorgehäuse (21) vorgesehen ist.

6. Radnabeneinheit nach einem der vorgenannten Ansprüche, **dadurch gekennzeichnet, dass** die Verbindungseinheit (1) wenigstens ein auf Zug belastetes Zugelement (2) und ein in Richtung eines Verstellweges verstellbares Spannelement (3) zum Erzeugen der Zugbelastung des Zugelementes und zum Verspannen wenigstens eines der beiden Statorelemente mit dem Motorgehäuse (21) umfasst.

7. Radnabeneinheit nach einem der vorgenannten Ansprüche, **dadurch gekennzeichnet, dass** die Richtung des Verstellweges des verstellbaren Spannelementes (3) im Wesentlichen senkrecht zur Richtung der Zugbelastung des Zugelementes (2) ausgebildet ist.

8. Radnabeneinheit nach einem der vorgenannten Ansprüche, **dadurch gekennzeichnet, dass** das Spannelement (3) eine zum Verstellweg winklig angeordnete erste Kontaktfläche zum Erzeugen der Zugbelastung und/oder das Zugelement (2) eine zur Zugbelastung winklig angeordnete zweite Kontaktfläche zum Erzeugen der Zugbelastung aufweist.

9. Radnabeneinheit nach einem der vorgenannten Ansprüche, **dadurch gekennzeichnet, dass** das Zugelement (2) an einem ersten Endabschnitt ein Gewinde zum Fixieren mit dem Statorelement (22) oder mit dem Motorgehäuse (21) aufweist.

10. Fahrzeug, insbesondere landwirtschaftliches Fahrzeug oder Baufahrzeug mit wenigstens zwei Antriebsrädern und/oder gelenkten Rädern und/oder mit Allradantrieb und/oder Allradlenkung, mit einer Radnabeneinheit nach einem der vorgenannten Ansprüche.

## Claims

1. A wheel hub unit for a vehicle having a hydraulic drive unit comprising a hydraulic motor (30), wherein at least one swivel axis and/or steering axis is provided for swivelling and/or steering the hydraulic motor, wherein the hydraulic motor has at least one motor housing (21), wherein the motor housing has a connecting flange (32) having at least one inlet and one outlet connection (27) for pressurisation with hydraulic fluid, wherein a rotary transmission (23) is provided for conducting the hydraulic fluid to/from the hydraulic motor, wherein the rotary transmission comprises at least one stator unit having at least one flange and a rotor unit (24) having at least two hydraulic connections (27 and 28) for pressurisation with hydraulic fluid and being rotatable about a rotary axis in relation to the stator unit, **characterised in that** the stator unit has at least one first stator element having a first flange surface (33) and a second stator element having a second flange surface (33), wherein a distance is provided in the direction of the rotary axis between the two stator elements and/or flange surfaces.

2. The wheel hub unit according to claim 1, **characterised in that** at least the hydraulic connections of the rotor unit (24) are arranged between the two stator elements and/or flange surfaces in the direction of the rotary axis.

3. The wheel hub unit according to one of the preceding claims, **characterised in that** a first maximum diameter and/or a first cross-sectional area of the rotor unit in the region of the hydraulic connections (27 and 28) is greater than a second maximum diameter and/or a second cross-sectional area of the rotor unit in the region of the stator elements (22) and/or flange surfaces.

4. The wheel hub unit according to one of the preceding claims, **characterised in that** the two flange surfaces of the stator elements (22) are arranged on the connecting flange of the motor housing (21).

5. The wheel hub unit according to one of the preceding claims, **characterised in that** at least one connecting unit (1) is provided for connecting at least one of the two stator elements (22) with the motor housing (21).

6. The wheel hub unit according to one of the preceding claims, **characterised in that** the connecting unit (1) comprises at least one tension element (2) being subjected to tension and a clamping element (3) being adjustable in the direction of an adjustment path to produce the tensile load of the tension element and to tension at least one of the two stator elements with the motor housing (21).

7. The wheel hub unit according to one of the preceding claims, **characterised in that** the direction of the adjustment path of the adjustable tension element (3) is formed substantially perpendicular to the direction of the tensile load of the tension element (2).

8. The wheel hub unit according to one of the preceding claims, **characterised in that** the tension element (3) has a first contact surface arranged at an angle to the adjustment path to produce the tensile load and/or the tension element (2) has a second contact surface arranged at an angle to the tensile load to produce the tensile load.

9. The wheel hub unit according to one of the preceding claims, **characterised in that** the tension element (2) has at its first end section a thread for fixing to the stator element (22) or to the motor housing (21).

10. A vehicle, in particular an agricultural vehicle or construction vehicle having at least two drive wheels and/or steered wheels and/or having all-wheel drive and/or all-wheel steering, comprising a wheel hub unit according to one of the preceding claims.

## Revendications

1. Unité de moyeu pour un véhicule comprenant une unité d'entraînement hydraulique comprenant un moteur hydraulique (30), au moins un axe de direction et/ou de pivotement pour le pivotement et/ou la direction du moteur hydraulique étant prévu, le moteur hydraulique présentant au moins un carter de moteur (21), le carter de moteur présentant une bride de raccordement (32) avec au moins un raccordement de sortie et un raccordement d'entrée (27) pour l'application de pression avec un fluide hydraulique, un passage rotatif (23) étant prévu pour l'acheminement du fluide hydraulique vers/depuis le moteur hydraulique, le passage rotatif comprenant au moins une unité de stator présentant au moins une bride et une unité de rotor (24) rotative par rapport à l'unité de station autour d'un axe de rotation, présentant au moins deux raccords hydrauliques (27 et 28) pour l'application de pression avec le fluide hydraulique, **caractérisée en ce que** l'unité de stator présente au moins un élément de stator présentant une première surface de bride (33) et un second élément de stator présentant une seconde surface de bride (33), en direction de l'axe de rotation, entre les deux éléments de stator et/ou les deux surfaces de bride, un espacement étant prévu.

2. Unité de moyeu selon la revendication 1, **caractérisée en ce que**, en direction de l'axe de rotation, au moins les raccords hydrauliques de l'unité de rotor (24) sont disposés entre les deux éléments de stator et/ou les deux surfaces de bride.

3. Unité de moyeu selon une des revendications précédentes, **caractérisée en ce que**, dans la zone des raccords hydrauliques (27 et 28), un premier diamètre maximum et/ou une première surface en section transversale de l'unité de rotor est supérieur(e) à un second diamètre maximum et/ou une seconde surface en section transversale de l'unité de rotor dans la zone des éléments de stator (22) et/ou des surfaces de bride.

4. Unité de moyeu selon une des revendications précédentes, **caractérisée en ce que** les deux surfaces de bride des éléments de stator (22) sont disposées sur la bride de raccordement du carter de moteur (21).

5. Unité de moyeu selon une des revendications précédentes, **caractérisée en ce qu'**au moins une unité de liaison (1) pour relier au moins un des deux éléments de stator (22) au carter de moteur (21) est prévue.

6. Unité de moyeu selon une des revendications précédentes, **caractérisée en ce que** l'unité de liaison (1) comprend au moins un élément de traction (2) sollicité en traction et un élément de serrage (3) réglable en direction d'une course de réglage, pour la production d'une charge en traction de l'élément de traction et pour le serrage d'au moins un des deux éléments de stator avec le carter de moteur (21).

7. Unité de moyeu selon une des revendications précédentes, **caractérisée en ce que** la direction de la course de réglage de l'élément de serrage (3) réglable est conçue essentiellement perpendiculaire à la direction de la charge en traction de l'élément de traction (2).

8. Unité de moyeu selon une des revendications précédentes, **caractérisée en ce que** l'élément de serrage (3) présente une première surface de contact disposée de façon angulaire par rapport à la course de réglage pour la production de la charge en traction et/ou l'élément de traction (2) présente une seconde surface de contact disposée de façon angulaire par rapport à la charge en traction pour la production de la charge en traction.

9. Unité de moyeu selon une des revendications précédentes, **caractérisée en ce que** l'élément de traction (2) présente, au niveau d'une première section d'extrémité, un filetage pour la fixation avec l'élément de stator (22) ou avec le carter de moteur (21).

10. Véhicule, notamment véhicule agricole ou enfin de chantier comprenant au moins deux roues motrices et/ou roues directrices et/ou comprenant une transmission intégrale et/ou une direction intégrale, comprenant une unité de moyeu selon une des revendications précédentes.
